# EUROPEAN PATENT APPLICATION

(11) **EP 4 804 290 A1**
(43) Date of publication of application: **09.09.2026**
(21) Application number: 24899125.9
(22) Date of filing: 29.04.2024
(51) Int. Cl.: H01M 10/613, H01M 10/6556, H01M 10/6568

(54) **LIQUID COOLING ASSEMBLY, BATTERY MODULE, AND BATTERY PACK**

(30) Priority: 04.12.2023 CN 202311650110; 04.12.2023 CN 202323294580 U
(71) Applicant: Eve Energy Co., Ltd., Huizhou, Guangdong 516006 (CN)
(72) Inventor: ZHAO, Yuhang, Guangdong 516006 (CN); ZHOU, Xiao, Guangdong 516006 (CN); HUANG, Liansheng, Guangdong 516006 (CN); JIANG, Jibing, Guangdong 516006 (CN)
(74) Representative: Nederlandsch Octrooibureau
(86) International application number: PCT/CN2024/090704
(87) International publication number: WO 2025/118473

(57) **Abstract**

The present disclosure provides a liquid cooling assembly, a battery module, and a battery pack. The liquid cooling assembly includes a plurality of liquid cooling units arranged at even intervals. Each of the plurality of liquid cooling units is provided with a delivery pipe body, a pipe snap-fit base part, a pipe snap-fit assembly part, and a liquid cooling plate detachably connected to the delivery pipe body. The pipe snap-fit base part and the pipe snap-fit assembly part are disposed at two ends of the delivery pipe body, respectively. For two adjacent liquid cooling units of the plurality of liquid cooling units, the pipe snap-fit base part of one of the two adjacent liquid cooling units is in snap-fit engagement with the pipe snap-fit assembly part of the other one of the two adjacent liquid cooling units.

## Description

This application claims priority to Chinese Patent Applications No. 202311650110.8, filed with China National Intellectual Property Administration on December 4, 2023, the entire contents of which are incorporated herein by reference.

### FIELD

The present disclosure relates to the field of battery technologies, and in particular, to a liquid cooling assembly, a battery module, and a battery pack.

### BACKGROUND

With economic development and technological advancement, lithium batteries, as one of the cleanest secondary energy sources, have been widely favored. Lithium batteries boast advantages such as light weight, high energy storage capacity, high power, no pollution, long service life, low self-discharge coefficient, and a wide temperature adaptation range. Consequently, lithium batteries are gradually gaining popularity and replacing other traditional batteries in the fields of energy storage and power batteries.

For example, provided are a battery module and a battery pack having the same in the related art. The battery module includes a support plate, a cooling plate, and a plurality of cells. The plurality of cells are each mounted on the support plate. The cooling plate is mounted on the support plate. A side wall of the cell is attached to a surface of the cooling plate. The cooling plate has a microchannel extending through the cooling plate. A protrusion is formed on an inner wall of the microchannel. Two ends of the microchannel are in communication with an inlet pipe and an outlet pipe, respectively. The inlet pipe is used for a cooling liquid to enter, pass through the microchannel, and flow out of the outlet pipe. In addition, an end of the cooling plate is provided with a first fixing post. The first fixing post is mounted on the support plate and is in communication with an end of each of a plurality of microchannels. The inlet pipe passes through a plurality of first fixing posts to connect ends of the plurality of cooling plates in series.

The battery module of the related art can effectively improve heat dissipation efficiency and prolong a service life of the cell. However, it has been found during production and assembly of the battery module that, a production error occurs in a manufacturing process of parts such as the cooling plate, as well as an assembly tolerance occurs in parts during the assembly process (such as an assembly tolerance between the cell and the cooling plate), and a model and dimension of the processed inlet pipe have been determined. Consequently, with the accumulation of errors and assembly tolerances, it is prone to cause an assembly difficulty when the battery module is assembled, or even render the battery module impossible to be assembled into a group.

### SUMMARY

### Technical solutions

In a first aspect, the present disclosure provides a liquid cooling assembly. The liquid cooling assembly includes a plurality of liquid cooling units arranged at intervals. Each of the plurality of liquid cooling units is provided with a delivery pipe body, a pipe snap-fit base part, a pipe snap-fit assembly part, and a liquid cooling plate detachably connected to the delivery pipe body. The pipe snap-fit base part and the pipe snap-fit assembly part are disposed at two ends of the delivery pipe body, respectively. For two adjacent liquid cooling units of the plurality of liquid cooling units, the pipe snap-fit base part of one of the two adjacent liquid cooling units is in snap-fit engagement with the pipe snap-fit assembly part of the other one of the two adjacent liquid cooling units, to allow two adjacent delivery pipe bodies to be in communication with each other.

In a second aspect, the present disclosure provides a battery module. The battery module includes: the liquid cooling assembly provided by the present disclosure; and a battery assembly having a plurality of battery units. Each battery unit has a plurality of cells arranged in a length direction of the liquid cooling plate of the liquid cooling assembly. The battery unit is disposed between two liquid cooling plates, and the cell is capable of exchanging heat with the liquid cooling plate.

In a third aspect, the present disclosure provides a battery pack. The battery pack includes the battery module provided by the present disclosure.

### Beneficial effects

The beneficial effects of the liquid cooling assembly, the battery module, and the battery pack provided by the present disclosure are as follows. Through the snap-fit engagement between the pipe snap-fit base part and the pipe snap-fit assembly part, not only are a plurality of delivery pipe bodies interconnected and communicated, but the liquid cooling assembly can also be adjusted in an extending direction of the delivery pipe body, thus compensating for and eliminating error accumulation occurring in the extending direction of the delivery pipe body. That is, assembly personnel can flexibly adjust an engagement position between the pipe snap-fit base part and the pipe snap-fit assembly part based on a production error of the liquid cooling plate and an assembly tolerance between the liquid cooling plate and the cell, which enables each cell of the battery unit to exchange heat with the liquid cooling plate stably, ensures assembly precision of the battery module, and reduces assembly difficulty of the battery module. It is possible to avoid a phenomenon in the related art where the battery module is prone to assembly difficulties or even impossible to be assembled into a group during assembly. Moreover, an overall structural strength of the liquid cooling assembly is ensured, preventing the occurrence of leakage in the liquid cooling assembly during the adjustment process. In addition, the parallel connection of a plurality of liquid cooling plates is also facilitated, thereby reducing flow resistance of a liquid cooling system in the battery pack and improving flow uniformity of the liquid cooling system.

### BRIEF DESCRIPTION OF THE DRAWINGS

FIG. 1 is a schematic view showing overall assembly of a liquid cooling assembly according to the present disclosure;
FIG. 2 is a schematic view showing an overall structure of a liquid cooling unit in the present disclosure;
FIG. 3 is a schematic structural view of a part of a liquid cooling unit in the present disclosure;
FIG. 4 is a schematic structural view of another part of a liquid cooling unit in the present disclosure;
FIG. 5 is a schematic view showing an overall structure of a battery module according to the present disclosure;
FIG. 6 is a schematic view showing an unengaged connection state of a liquid cooling assembly according to the present disclosure;
FIG. 7 is a schematic view showing an engaged connection state of a liquid cooling assembly according to the present disclosure; and
FIG. 8 is a schematic view showing another engaged connection state of a liquid cooling assembly according to the present disclosure.

### DETAILED DESCRIPTION

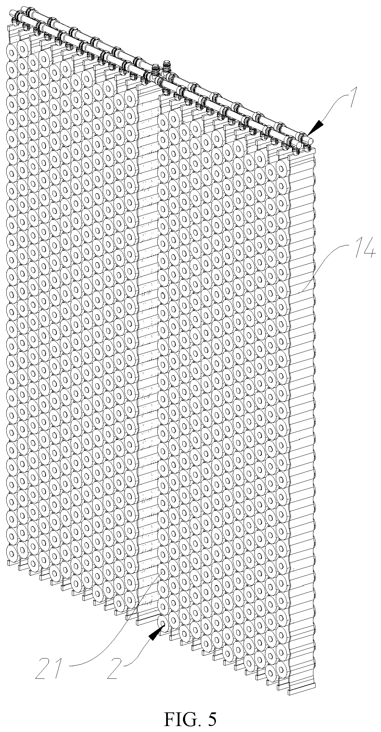

Specifically, referring to FIG. 5, embodiments of the present disclosure disclose a battery module. The battery module includes a battery assembly and a liquid cooling assembly. The battery assembly has a plurality of battery units 2. The battery unit 2 has a plurality of cells 21. In an embodiment, the cells 21 are cylindrical batteries. In other embodiments, the cells 21 may also be selected as square batteries.

In this embodiment, the aforementioned liquid cooling assembly includes a plurality of liquid cooling units 1 arranged at intervals. Each liquid cooling unit 1 is provided with a delivery pipe body 11 and a liquid cooling plate 14 detachably connected to the delivery pipe body 11. The plurality of cells 21 are arranged in a length direction of the liquid cooling plate 14 of the liquid cooling assembly. That is, an arrangement direction of the plurality of cells 21 is the same as the length direction of the liquid cooling plate 14. The battery unit 2 is disposed between two liquid cooling plates 14. Moreover, the cell 21 is capable of exchanging heat with the liquid cooling plate 14.

The liquid cooling plate 14 has a heat-exchange contact surface 143. An external heat exchange medium (such as a cooling liquid or water) is supplied to the liquid cooling plate 14 through the delivery pipe body 11. When the cell 21 is in a charging and discharging state, a temperature of the cell 21 is higher than that of the heat exchange medium in the liquid cooling plate 14. A large amount of heat released by the cell 21 is transferred to the heat-exchange contact surface 143 and then to the heat exchange medium, and is finally discharged from the liquid cooling assembly with the flow of the heat exchange medium, thereby achieving a purpose of cooling the battery assembly by the liquid cooling assembly to allow each cell 21 of the battery assembly to be operated within an optimal temperature range.

As shown in FIG. 5, in order for the large amount of heat released by the cell 21 to be absorbed by the liquid cooling plate 14 of the liquid cooling assembly in time and to improve heat exchange efficiency of the liquid cooling plate 14, the heat-exchange contact surface 143 of the liquid cooling plate 14 is arranged in a wave-like shape. That is, the heat-exchange contact surface 143 of the liquid cooling plate 14 has a plurality of arc-shaped curved valleys. Each cell 21 is abutted against and fitted in a corresponding valley. Preferably, a shape and dimension of each valley are adapted to those of the cell 21, which increases a heat exchange area between the cell 21 and the heat-exchange contact surface 143, maximizes the heat exchange efficiency of the liquid cooling plate 14, and can effectively prevent a risk of thermal runaway occurring in each cell 21 in the battery assembly.

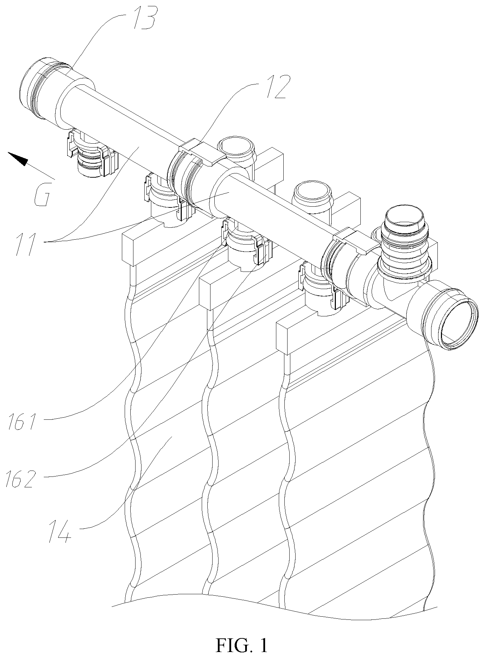

In some embodiments, specifically referring to FIGS. 1, 2, and 5, the aforementioned liquid cooling assembly includes a pipe snap-fit base part 12 and a pipe snap-fit assembly part 13. The pipe snap-fit base part 12 and the pipe snap-fit assembly part 13 are disposed at two ends of the delivery pipe body 11, respectively. That is, the pipe snap-fit base part 12, the pipe snap-fit assembly part 13, and the delivery pipe body 11 are integrally formed to ensure sealing properties and structural strength of the pipe, thereby ensuring overall structural stability of the liquid cooling assembly.

For two adjacent liquid cooling units 1 of the plurality of liquid cooling units 1, the pipe snap-fit base part 12 of one of the two adjacent liquid cooling units 1 is in snap-fit engagement with the pipe snap-fit assembly part 13 of the other one of the two adjacent liquid cooling units 1, such that two adjacent delivery pipe bodies 11 are in communication with each other. In this way, mounting and connection in this manner is more efficient and convenient, reducing a difficulty of interconnecting the delivery pipe bodies 11.

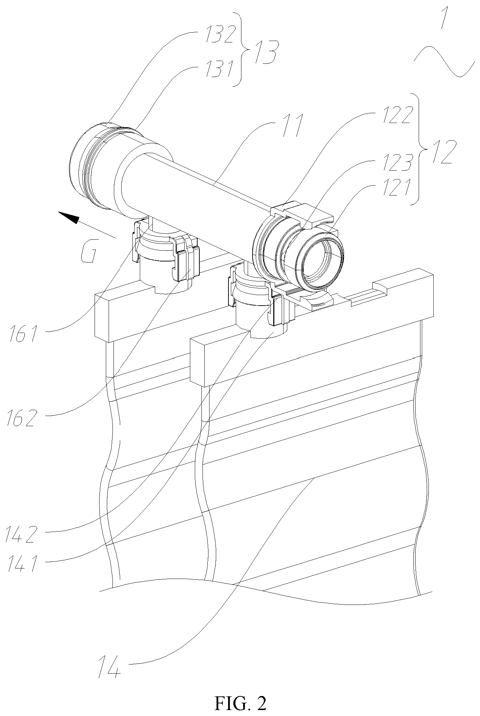

In some embodiments, specifically referring to FIGS. 1 and 2, the pipe snap-fit assembly part 13 is separable relative to the pipe snap-fit base part 12 in a first extending direction G of the delivery pipe body 11, to keep two adjacent liquid cooling plates 14 spaced apart from each other.

Specifically, an adjustment space L3 is provided between the pipe snap-fit base part 12 and the pipe snap-fit assembly part 13 in an engaged connection state, which enables the pipe snap-fit base part 12 to change its snap-fit engagement position with the pipe snap-fit assembly part 13 in the first extending direction G of the delivery pipe body 11, thereby achieving a purpose of separation between the pipe snap-fit assembly part 13 and the pipe snap-fit base part 12.

Therefore, when a production error occurs in a manufacturing process of parts such as the liquid cooling plates 14, and an assembly tolerance occurs during the assembly of parts, i.e., when error accumulation occurs in the first extending direction G of the delivery pipe body 11, the snap-fit engagement position between the pipe snap-fit base part 12 and the pipe snap-fit assembly part 13 can be adjusted. In this way, by adjusting the snap-fit engagement position between the pipe snap-fit base part 12 and the pipe snap-fit assembly part 13 in the first extending direction G of the delivery pipe body 11 to compensate for and eliminate the error accumulation occurring in the first extending direction G of the delivery pipe body 11, not only are two adjacent liquid cooling plates 14 kept spaced apart, but each cell 21 of the battery unit 2 can also exchange heat with the liquid cooling plate 14 stably. In this way, assembly precision of the battery module is ensured, and assembly difficulty of the battery module is reduced.

It must be noted that by adjusting the snap-fit engagement position between the pipe snap-fit base part 12 and the pipe snap-fit assembly part 13 based on the production error of the liquid cooling plate 14 and the assembly tolerance between the liquid cooling plate 14 and each cell 21, a structure and configuration of the delivery pipe body 11 itself do not need to be changed, thus avoiding a phenomenon of damage to the delivery pipe body 11 during tensile deformation or leakage caused by local stress concentration. Therefore, the delivery pipe body 11 can be manufactured using a material with high comprehensive properties such as hardness and strength. It also avoids a phenomenon of oxidation and aging of the delivery pipe body 11 during long-term use, which occurs when the delivery pipe body 11 is made of a non-metallic material with strong flexibility and plasticity. In this way, stability and safety of the liquid cooling assembly and the battery pack employing the same during long-term use can be effectively ensured.

It should also be noted that the aforementioned spaced distribution of two adjacent liquid cooling plates 14 may mean that a spacing between two adjacent liquid cooling plates 14 is kept the same or different. That is, battery units 2 disposed between two adjacent liquid cooling plates 14 are arranged in multiple rows.

In some embodiments, specifically referring to FIGS. 1, 2, and 4, the pipe snap-fit base part 12 includes a first connection pipe 121 and a clamping-force-bearing beam 122 disposed at an outer side of the first connection pipe 121. The pipe snap-fit assembly part 13 includes a second connection pipe 132 and a clamping-force-bearing portion 131 disposed at the second connection pipe 132. Preferably, an outer diameter of the first connection pipe 121 is smaller than an inner diameter of the second connection pipe 132 within a range of assembly tolerance. The first connection pipe 121 is inserted into the second connection pipe 132. Moreover, the clamping-force-bearing beam 122 is in snap-fit with the clamping-force-bearing portion 131. In this way, a purpose of the snap-fit engagement between the pipe snap-fit base part 12 and the pipe snap-fit assembly part 13 is achieved.

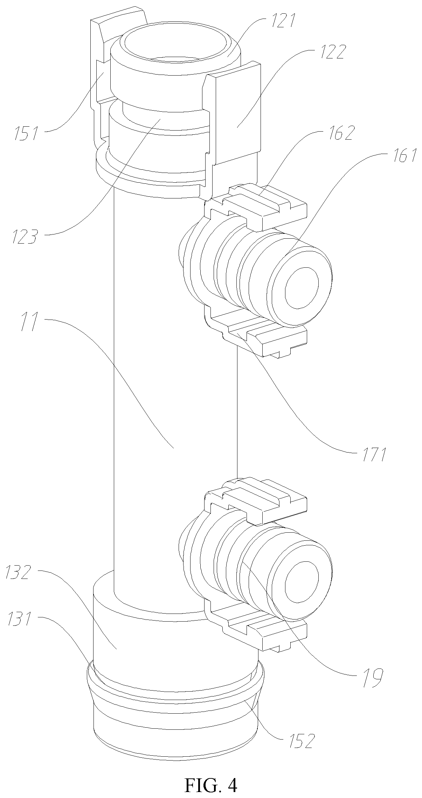

It should be noted that, in order to prevent the heat exchange medium from leaking between the first connection pipe 121 and the second connection pipe 132 due to an assembly tolerance between the first connection pipe 121 and the second connection pipe 132, a sealing ring may be provided between the first connection pipe 121 and the second connection pipe 132. Specifically, as shown in FIGS. 2 and 4, a first sealing groove 123 in which the sealing ring is embedded is formed at an outer side wall of the first connection pipe 121. In this way, under the action of the sealing ring, sealing properties of the snap-fit engagement between the pipe snap-fit base part 12 and the pipe snap-fit assembly part 13 are effectively ensured. Meanwhile, during the process of adjusting the snap-fit engagement position, the sealing ring remains sealed between the first connection pipe 121 and the second connection pipe 132, which allows optimal sealing properties of the liquid cooling assembly to be kept during both assembly adjustment and use, providing the best guarantee for use safety of the battery module and battery pack.

An unexpected effect is that, since the sealing ring abuts against the first connection pipe 121 and also abuts against the second connection pipe 132, a sufficient friction force occurs between the pipe snap-fit base part 12 and the pipe snap-fit assembly part 13, making it difficult for the first connection pipe 121 and the second connection pipe 132 to move after being inserted and engaged with each other.

In some embodiments, specifically referring to FIGS. 1, 2, and 4, a slot structure 151 is formed at the clamping-force-bearing beam 122, and a protrusion structure 152 is formed at the clamping-force-bearing portion 131. The protrusion structure 152 extends around a peripheral side of the second connection pipe 132, and is engaged into the slot structure 151. Moreover, an adjustment space L3 is formed between a wall of the slot structure 151 and the protrusion structure 152 in the first extending direction G of the delivery pipe body 11.

Therefore, under the action of the adjustment space L3, a purpose of adjusting the snap-fit engagement position between the pipe snap-fit base part 12 and the pipe snap-fit assembly part 13 in the first extending direction G of the delivery pipe body 11 to compensate for and eliminate error accumulation is achieved, thereby effectively ensuring that two spaced liquid cooling plates 14 maintain the same spacing.

It should be noted that, in addition to forming the slot structure 151 on the clamping-force-bearing beam 122 and forming the protrusion structure 152 on the clamping-force-bearing portion 131 as described above, it is also possible to form the slot structure 151 on the clamping-force-bearing portion 131 and form the protrusion structure 152 on the clamping-force-bearing beam 122.

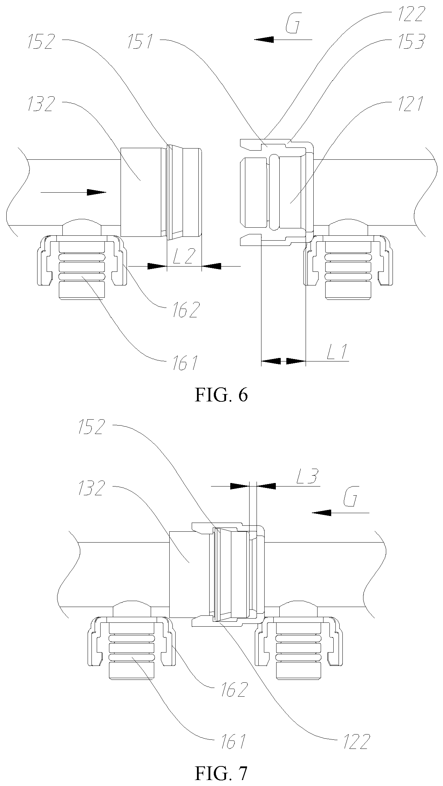

It should also be noted that, specifically referring to FIGS. 6, 7, and 8, a distance between a fixed connection end of the clamping-force-bearing beam 122 and a side wall of the slot structure 151 away from the fixed connection end is a first spacing L1. The fixed connection end here refers to an end of the clamping-force-bearing beam 122 used to connect to the first connection pipe 121. A slot length of the slot structure 151 is smaller than or equal to the first spacing L1, making the adjustment space L3 more ample.

Specifically, referring to FIGS. 4 and 6, a limiting portion 153 is formed between a side of the slot structure 151 close to the fixed connection end and the fixed connection end of the clamping-force-bearing beam 122. When the protrusion structure 152 abuts against the limiting portion 153, the pipe snap-fit base part 12 may be quickly engaged and positioned with the pipe snap-fit assembly part 13, thereby improving engagement efficiency of the liquid cooling assembly. At this time, the slot length of the slot structure 151 is smaller than the first distance L1.

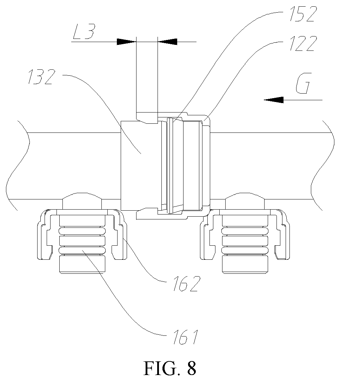

In some embodiments, specifically referring to FIGS. 7 and 8, a distance between an opening of the second connection pipe 132 and a side of the protrusion structure 152 away from the opening of the second connection pipe 132 is a second spacing L2. The second spacing L2 is smaller than the first spacing L1. Moreover, an adjustment spacing of the adjustment space L3 is equal to the first spacing L1 minus the second spacing L2. This allows for better compensation and elimination of the error accumulation in the first extending direction G of the delivery pipe body 11, enabling better adjustment based on production errors and assembly tolerances of different liquid cooling plates 14 to satisfy a tolerance requirement of the battery pack.

Specifically, referring to FIGS. 4 and 6, an extending pipe head may be formed between a side of the protrusion structure 152 close to the opening and the opening of the second connection pipe 132. In addition, in order to facilitate quick and smooth engagement between the pipe snap-fit base part 12 and the pipe snap-fit assembly part 13, a guide surface is formed at a side of the protrusion structure 152 close to the extending pipe head.

In some embodiments, specifically referring to FIG. 8, the aforementioned clamping-force-bearing beam 122 is an elastic structure extending in the first extending direction G of the delivery pipe body 11. For example, optionally, the clamping-force-bearing beam 122 may be made of a plastic material to ensure that the clamping-force-bearing beam 122 is elastic. When the protrusion structure 152 abuts against the side of the slot structure 151 close to the fixed connection end, the clamping-force-bearing beam 122 will deform. In this way, a length of the clamping-force-bearing beam 122 and the slot length of the slot structure 151 can be increased, thereby increasing the adjustment spacing of the adjustment space L3. Optionally, the first connection pipe 121, the delivery pipe body 11, and the second connection pipe 132 may be made of a metal material to ensure sufficient structural strength, making the connection between the pipe snap-fit base part 12 and the pipe snap-fit assembly part 13 firmer and more stable.

In some embodiments, specifically referring to FIGS. 1, 2, and 4, a flow guide branch pipe 161 is formed on the delivery pipe body 11. The flow guide branch pipe 161 is provided with a branch snap-fit beam 162. A liquid cooling connector 141 is provided on the liquid cooling plate 14. The liquid cooling connector 141 is provided with a liquid cooling clamping portion 142. The branch snap-fit beam 162 is engaged with the liquid cooling clamping portion 142. Moreover, the flow guide branch pipe 161 is in communication with the liquid cooling connector 141. In this way, a purpose of connecting and fixing the liquid cooling plate 14 to the delivery pipe body 11 is achieved. Moreover, the heat exchange medium inside the delivery pipe body 11 may sequentially flow through the flow guide branch pipe 161 and the liquid cooling connector 141 and into an interior of the liquid cooling plate 14. Alternatively, the heat exchange medium inside the liquid cooling plate 14 may sequentially flow through the liquid cooling connector 141 and the flow guide branch pipe 161 and into an interior of the delivery pipe body 11.

In some embodiments, specifically referring to FIGS. 2 and 4, a branch adjustment groove 171 is formed at the branch snap-fit beam 162, and a branch protrusion portion 172 is provided on the liquid cooling clamping portion 142. The branch protrusion portion 172 extends around a peripheral side of the liquid cooling connector 141. The branch adjustment groove 171 is engaged with the branch protrusion portion 172, and a compensation gap is formed between a groove wall of the branch adjustment groove 171 and the branch protrusion portion 172 in an extending direction of the flow guide branch pipe 161. Under the action of the compensation gap, a purpose of adjusting an engagement position between the flow guide branch pipe 161 and the liquid cooling connector 141 in the extending direction of the flow guide branch pipe 161 is achieved, thus realizing an effect that the liquid cooling plate 14 can be flexibly adjusted in the extending direction of the flow guide branch pipe 161, i.e., compensating for and eliminating an assembly tolerance between the liquid cooling plate 14 and the cell 21 in the extending direction of the flow guide branch pipe 161, enabling each cell 21 to fit more compactly against the heat-exchange contact surface 143 of the liquid cooling plate 14.

It should be noted that, in addition to forming the branch adjustment groove 171 on the branch snap-fit beam 162 and providing the branch protrusion portion 172 on the liquid cooling clamping portion 142 as described above, it is also possible to provide the branch protrusion portion 172 on the branch snap-fit beam 162 and form the branch adjustment groove 171 on the liquid cooling clamping portion 142.

It should also be noted that, in order to prevent the heat exchange medium from leaking between the flow guide branch pipe 161 and the liquid cooling connector 141, optionally, at least one sealing member 19 may be provided between the flow guide branch pipe 161 and the liquid cooling connector 141. Specifically, as shown in FIG. 4, a second sealing groove in which the sealing member 19 is embedded is formed at an outer side wall of the flow guide branch pipe 161. Under the action of the sealing member 19, sealing engagement between the flow guide branch pipe 161 and the liquid cooling connector 141 are effectively ensured.

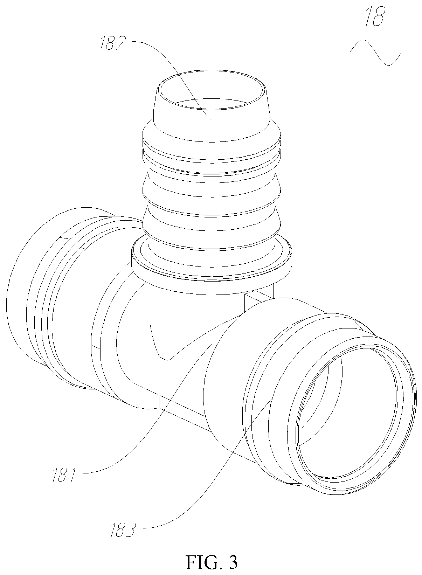

In some embodiments, specifically referring to FIGS. 1 and 3, the liquid cooling assembly further includes a pipe external connection member 18. The pipe external connection member 18 includes an external connection pipe body 181, an external connection branch pipe 182 in communication with the external connection pipe body 181, and an external connection engagement head 183 disposed at an end of the external connection pipe body 181. The external connection engagement head 183 is capable of being in snap-fit with the pipe snap-fit base part 12.

Specifically, the external connection engagement head 183 is provided with an external connection clamping portion that extends around a peripheral side of the external connection engagement head 183. The external connection clamping portion is engaged into the slot structure 151 of the pipe snap-fit base part 12, thereby achieving a purpose of fixedly engaging the external connection engagement head 183 to the pipe snap-fit base part 12 on the delivery pipe body 11. In addition, the external heat exchange medium sequentially flows through the external connection branch pipe 182, the external connection pipe body 181, and the delivery pipe body 11, thereby guiding the external heat exchange medium to the delivery pipe body 11 of the liquid cooling assembly and stably supplying it to the liquid cooling plate 14 of the liquid cooling assembly.

In some embodiments, optionally, an external connection gap is formed between the wall of the slot structure 151 and the external connection clamping portion in the first extending direction G of the delivery pipe body 11. In this way, under the action of the external connection gap, a purpose of adjusting an engagement position between the delivery pipe body 11 and the external connection pipe body 181 in the first extending direction G of the delivery pipe body 11 can be achieved, effectively compensating for and eliminating an assembly tolerance between the delivery pipe body 11 and the external connection pipe body 181 in the first extending direction G of the delivery pipe body 11.

It should be noted that, in addition to engaging with the pipe snap-fit base part 12, the external connection engagement head 183 may also be engaged with the pipe snap-fit assembly part 13.

It should also be noted that a plurality of fluid channels are provided inside the aforementioned liquid cooling plate 14. The plurality of fluid channels are evenly arranged. Moreover, two adjacent fluid channels are communicated with each other end-to-end to form a serpentine channel. In this way, after the heat exchange medium flows into the serpentine channel, the heat exchange medium will flow circuitously from top to bottom or from bottom to top in an arrangement direction of the plurality of fluid channels, which is equivalent to the heat exchange medium flowing circuitously from bottom to top or from top to bottom in a height direction of the cell 21. In this way, a flow path of the heat exchange medium within the liquid cooling plate 14 is increased, which greatly prolongs a heat exchange time between the heat exchange medium and the cell 21, thereby effectively improving a utilization rate of the heat exchange medium.

In some embodiments, specifically referring to FIG. 2, the aforementioned liquid cooling plate 14 includes a main fluid collector 144 internally having a main fluid collection cavity, a secondary fluid collector internally having a secondary fluid collection cavity, and a liquid cooling plate body 145 having the plurality of fluid channels. The main fluid collector 144 and the secondary fluid collector are connected to two ends of the liquid cooling plate body 145, respectively. Moreover, the plurality of fluid channels are communicated with each other end-to-end through the main fluid collection cavity and the secondary fluid collection cavity to form the serpentine channel. The connection manner here may refer to a heat exchange assembly for a battery, a battery module, and a battery pack disclosed in Chinese Patent No. CN219066953U, published on May 23, 2023.

Based on the structure and connection relationship of the battery module, the embodiments of the present disclosure further disclose a battery pack. The battery pack includes the battery module provided according to the embodiments of the present disclosure.

## Claims

1. A liquid cooling assembly, comprising:
a plurality of liquid cooling units (1) arranged at intervals, wherein:
each of the plurality of liquid cooling units (1) is provided with a delivery pipe body (11), a pipe snap-fit base part (12), a pipe snap-fit assembly part (13), and a liquid cooling plate (14) detachably connected to the delivery pipe body (11);
the pipe snap-fit base part (12) and the pipe snap-fit assembly part (13) are disposed at two ends of the delivery pipe body (11) respectively; and
for two adjacent liquid cooling units (1) of the plurality of liquid cooling units (1), the pipe snap-fit base part (12) of one of the two adjacent liquid cooling units (1) is in snap-fit engagement with the pipe snap-fit assembly part (13) of the other one of the two adjacent liquid cooling units (1), to allow two adjacent delivery pipe bodies (11) to be in communication with each other.

2. The liquid cooling assembly according to claim 1, wherein the pipe snap-fit assembly part (13) is separable relative to the pipe snap-fit base part (12) in a first extending direction G of the delivery pipe body (11), to keep two adjacent liquid cooling plates (14) spaced apart from each other.

3. The liquid cooling assembly according to claim 1 or 2, wherein:
the pipe snap-fit base part (12) comprises a first connection pipe (121) and a clamping-force-bearing beam (122) disposed at an outer side of the first connection pipe (121); and
the pipe snap-fit assembly part (13) comprises a second connection pipe (132) and a clamping-force-bearing portion (131) disposed at the second connection pipe (132),
wherein the first connection pipe (121) is inserted into the second connection pipe (132), and the clamping-force-bearing beam (122) is in snap-fit with the clamping-force-bearing portion (131).

4. The liquid cooling assembly according to claim 3, wherein:
one selected from the clamping-force-bearing beam (122) and the clamping-force-bearing portion (131) has a slot structure (151); and
the other one of the clamping-force-bearing beam (122) and the clamping-force-bearing portion (131) is provided with a protrusion structure (152),
wherein the protrusion structure (152) is engaged into the slot structure (151), and wherein an adjustment space L3 is formed between a wall of the slot structure (151) and the protrusion structure (152) in the first extending direction G of the delivery pipe body (11).

5. The liquid cooling assembly according to claim 4, wherein:
a distance between a fixed connection end of the clamping-force-bearing beam (122) and a side wall of the slot structure (151) away from the fixed connection end is a first spacing L1; and
a slot length of the slot structure (151) is smaller than or equal to the first spacing L1.

6. The liquid cooling assembly according to claim 5, wherein:
a distance between an opening of the second connection pipe (132) and a side of the protrusion structure (152) away from the opening of the second connection pipe (132) is a second spacing L2;
the second spacing L2 is smaller than the first spacing L1; and
an adjustment spacing of the adjustment space L3 is equal to the first spacing L1 minus the second spacing L2.

7. The liquid cooling assembly according to any one of claims 4 to 6, wherein the clamping-force-bearing beam (122) is an elastic structure extending in the first extending direction G of the delivery pipe body (11).

8. The liquid cooling assembly according to any one of claims 1, 2, 4, 5, and 6, wherein:
a flow guide branch pipe (161) is formed on the delivery pipe body (11), the flow guide branch pipe (161) being provided with a branch snap-fit beam (162);
a liquid cooling connector (141) is provided on the liquid cooling plate (14), the liquid cooling connector (141) being provided with a liquid cooling clamping portion (142);
the branch snap-fit beam (162) is engaged with the liquid cooling clamping portion (142); and
the flow guide branch pipe (161) is in communication with the liquid cooling connector (141).

9. The liquid cooling assembly according to claim 8, wherein:
one selected from the branch snap-fit beam (162) and the liquid cooling clamping portion (142) has a branch adjustment groove (171); and
the other one of the branch snap-fit beam (162) and the liquid cooling clamping portion (142) is provided with a branch protrusion portion (172),
wherein the branch adjustment groove (171) is engaged with the branch protrusion portion (172), and wherein a compensation gap is formed between a groove wall of the branch adjustment groove (171) and the branch protrusion portion (172) in an extending direction of the flow guide branch pipe (161).

10. The liquid cooling assembly according to claim 8, wherein:
a plurality of fluid channels are provided inside the liquid cooling plate (14), the plurality of fluid channels are evenly arranged; and
two adjacent fluid channels of the plurality of fluid channels are communicated with each other end-to-end to form a serpentine channel.

11. The liquid cooling assembly according to claim 10, wherein:
the liquid cooling plate (14) comprises a main fluid collector (144) internally having a main fluid collection cavity, a secondary fluid collector internally having a secondary fluid collection cavity, and a liquid cooling plate body (145) having the plurality of fluid channels;
the main fluid collector (144) and the secondary fluid collector are connected to two ends of the liquid cooling plate body (145), respectively; and
the plurality of fluid channels are communicated with each other end-to-end through the main fluid collection cavity and the secondary fluid collection cavity to form the serpentine channel.

12. The liquid cooling assembly according to any one of claims 1, 2, 4, 5, and 6, further comprising:
a pipe external connection member (18), wherein the pipe external connection member (18) comprises an external connection pipe body (181), an external connection branch pipe (182) in communication with the external connection pipe body (181), and an external connection engagement head (183) disposed at an end of the external connection pipe body (181), the external connection engagement head (183) being capable of being in snap-fit with the pipe snap-fit base part (12) or the pipe snap-fit assembly part (13).

13. A battery module, comprising:
the liquid cooling assembly according to any one of claims 1 to 12; and
a battery assembly having a plurality of battery units (2),
wherein each of the plurality of battery units (2) has a plurality of cells (21) arranged in a length direction of the liquid cooling plate (14) of the liquid cooling assembly, the battery unit (2) is disposed between two liquid cooling plates (14), and the cell (21) is capable of exchanging heat with the liquid cooling plate (14).

14. A battery pack, comprising the battery module according to claim 13.
